# EUROPEAN PATENT APPLICATION

(11) **EP 0 943 944 A1**
(43) Date of publication of application: **22.09.1999**
(21) Application number: 99200595.9
(22) Date of filing: 03.03.1999
(51) Int. Cl.: G02B 6/44

(54) **Fibre optic patch panel**

(30) Priority: 18.03.1998 GB 9805755
(71) Applicant: N.V. RAYCHEM S.A., 3010 Kessel-Lo (BE)
(72) Inventor: Wambeke, Alain, 3440 Zoutleeuw (BE); Vanderlinden, Michel, 3052 Blanden (BE)
(74) Representative: Jay, Anthony William

(57) **Abstract**

A panel for supporting a plurality of fibre optic connectors, which panel is provided with a plurality of apertures for receiving the connectors arranged in at least one row with a part of each connector so received being removable from a front of the panel, wherein the apertures of the at least one row are arranged such that connectors received therein diverge forwardly of the front of the panel.

## Description

This invention relates to fibre optic management systems or distribution centres and in particular to patch panels for use in such systems and centres.

Fibre optic management systems or distribution centres are used for the organisation of optical cables and connectors. Such management systems can take the form of a cabinet situated on the street or within a building and are used for separating and organising the optical fibres and cables entering the building. A fibre optic management system can also take the form of an equipment rack in a central exchange, such as a central telephone exchange, or sub-racks at customer premises. In such management systems fibre connectors are supported on a fixed panel known as a patch panel. Patch panels are used for securing and retaining the connectors of fibres and cables and the connectors are generally arranged on the patch panel in rows and columns. Access to individual connectors on a patch panel after initial installation is often required to allow changes such as reassignment to be made to those connectors. At headend or exchange environments in particular, reconfigurations, testing and expansion are regularly required for which reason easy access to individual connectors is essential. Access to individual connectors in conventional systems can, however, be impeded due to the general lack of space and by the presence of fibres and cables running to adjacent connectors.

At present there is great need to increase the capacity of cabinets and racks by increasing the number of connectors, whilst at the same time maintaining adequate access to individual connectors to allow subsequent disconnection and reconnection operations to be performed without undue difficulty.

According to the present invention there is provided a panel for supporting a plurality of fibre optic connectors, which panel is provided with a plurality of apertures for receiving the connectors arranged in at least one row with a part of each connector so received being removable from a front of the panel, wherein the apertures of the at least one row are arranged such that connectors received therein diverge forwardly of the front of the panel.

With the present invention connectors mounted in the row of apertures may radiate out from the front of the panel and the space between individual connectors is increased by their divergence.

Preferably the connectors received within the at least one row diverge forwardly of the front of the panel in a plurality of directions. In other words the apertures in any given row are preferably divergent in more than two directions.

Preferably there are a plurality of rows of apertures for receiving the connectors. In which case they may be arranged such that connectors held in each row lie in a common plane, the planes defined by the connectors of each row being parallel to one another. The apertures of each row may be orientated so that the connectors lie in a common plane and the planes defined by the connectors are inclined with respect to one another. The inclination of the planes is preferably such as to increase the relative divergence of the connectors to the front of the panel.

The relative divergence of adjacent connectors, i.e. their degree of inclination to each other, may be constant or varying along the row. The relative inclination may increase towards one or both ends of the or each row.

With a plurality of rows the apertures of each row may be positioned and oriented so that columns of apertures are formed. The connectors held in each column of apertures may lie in a common plane and the planes defined by the columns of connectors will be inclined with respect to one another due to the frontal divergence of the connectors.

In a preferred embodiment the panel supports an array of connectors arranged in parallel extending rows with each row arranged along a radius of curvature. More preferably each row is arranged along the same radius of curvature so that connectors mounted in the array of apertures radiate out from points along a single line. The radius of curvature may be regular or irregular. The apertures may be arranged in any desired location or in any desired pattern along the radius of curvature but preferably are regularly spaced and where a plurality of rows is provided in the patch panel the apertures in each row may be similarly positioned so that the apertures are regularly arranged into columns.

The divergence of connectors may be achieved by curvature. The at least one row of apertures may be orientated to define a part-circular surface. With a plurality of rows, a part-cylindrical or part-spherical surface, e.g. a part of an oblate or prelate sphere, may be defined. To achieve this the apertures may be located on parts of the panel positioned so as to allow the apertures to be divergently orientated, e.g. to lie along a line of curvature. The apertures may be located, for example, on suitably positioned flaps, facets or faces of the panel. Alternatively a part of the surface of the panel in which the at least one row of apertures is located may be curved. A part or the whole of the surface of the panel in which the apertures are located may be curved in one plane so that it presents a part-cylindrical surface on which the apertures are arranged as desired, for example in regularly spaced rows and columns. The panel, or a part of its surface, may be curved in more than one plane, for example it may be curved around two perpendicular planes so that the surface on which the apertures are provided is part-spherical in shape. The degree of curvature in the two planes may be the same or different so that regular or irregular part-spherical surfaces are obtained.

The panel may be used on its own or with other panels, and in particular with other panels according to the present invention. Where more than one panel is utilised they may be arranged in any required form. They are preferably arranged to maximise access to connectors held within the apertures. When arranged side by side they may be positioned so that they face in substantially the same or in different directions. They may be positioned, for example, along a straight line, or more preferably they are arranged along a radius of curvature. When that radius of curvature is substantially the same as that used for divergent orientation of the at least one row of apertures the space between the individual panels is maximised and their apertures may be positioned to radiate out from a single source. The panels may be arranged so that the orientation of their apertures is such as to define respective parts of a common spherical surface. Where more than one panel is utilised they may be jointed together, for example along an edge region, or they may remain as separate components.

In use, the panel may take the form of a patch panel mounted within a rack or a cabinet. The mounting can take any suitable or conventional form, for example, it may be mounted within a slidable frame or via mounting brackets, and more preferably rather than be mounted at a perpendicular angle to the wall of the cabinet or rack on which it is mounted, it be angled at an angle of greater than 90°. The patch panel is preferably angled with respect to the part of the cabinet or rack on which it is mounted at an obtuse angle, i.e. at an angle between 90 and 180°, and more preferably between 90 and 135°, e.g. between 90 and 110°. Mounting at such an angle ensures that the front surface of the patch panel in which the connectors are mounted slants backwards to allow easy access to connectors mounted in that surface.

Where the patch panel is mounted within a frame or base, for example within a slidable base, that frame or base preferably has one or more cut outs or holes provided so as to facilitate accessibility to connectors mounted in the patch panel. Where, for example, the base or frame covers the back of the patch panel such cut outs or holes will allow access to the back of the patch panel and to connectors extending out therefrom.

The means by which the connectors are mounted in the apertures of the panel may take any suitable form such as those means conventionally used in the art. The connectors may be mounted directly into the apertures or via mounts and means may be provided for retaining and securing the connectors in place.

The panel may take the form of a simple sheet in which the apertures are provided or it may take the form of a corrugated support provided with a series of support members or racks which extend in stepped relation to each other. In other words the panel may have a plurality of corrugations defined by alternatively oppositely inclined faces of the panel and the row of apertures are formed in alternate said faces.

The present invention is advantageous as it mitigates the problem of reduced accessibility in high density patch panels where the number of connectors in any given space is maximised. The surface of the panel in which at least one row of apertures is provided is shaped so as to maximise the space between the connectors along that row. By orientating the connectors away from each other on the front of the panel accessibility to those connectors is improved. A further advantage of a panel according to the present invention is that it directs cables or fibres, e.g. fibre optics, attached to connectors mounted in the panel in a predetermined direction. By diverging the orientation of the apertures positioned within the panel connectors mounted therein are able to direct attached fibres in a divergent distribution which provides greater organisation and manageability of those fibres than when they are all directed in the same direction as is generally conventionally the case.

According to the present invention there is also provided a fibre optic management system, such as a cabinet or rack, incorporating a patch panel of the present invention as hereinbefore described.

For a better understanding of the present invention, and to show how the same may be put into effect, reference will now be made, for the purposes of illustration only, to the accompanying drawings in which:
Figure 1 is a perspective view of a first embodiment of a patch panel according to the present invention;
Figure 2 is a side view of the embodiment of Figure 1;
Figure 3 is a plan view of the embodiment of Figure 1;
Figure 4 is a perspective view of two patch panels according to the present invention mounted within a connection module;
Figure 5 is a perspective view of two further patch panels according to the present invention mounted within a connection module; and
Figure 6 is a) a perspective view and b) a plan view of a further embodiment of a panel according to the present invention.

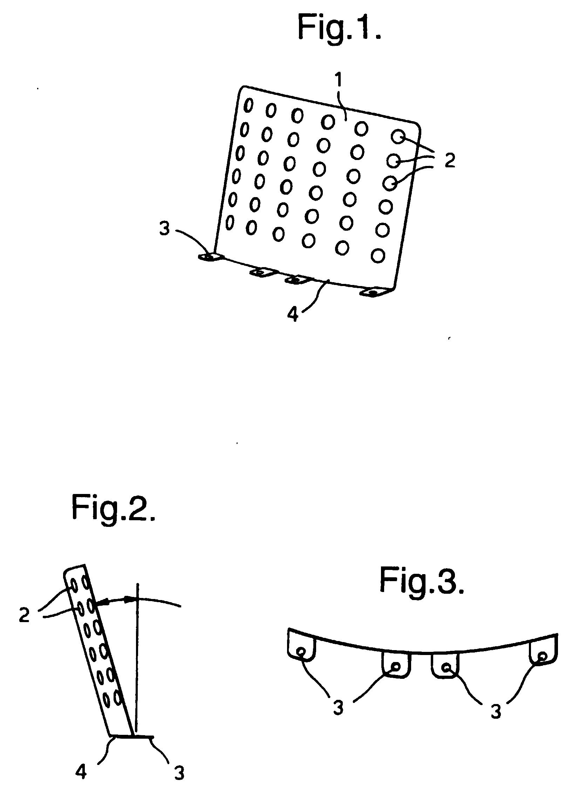

Figure 1 shows a patch panel 1 of the type used in a cabinet for separating and organising optical fibres to be connected end to end, for example prior to entering or within a building. The patch panel 1 takes the form of a simple sheet of material formed into a support provided with an array of apertures 2 punched out of the sheet. The array of apertures 2 are arranged in regular rows and columns. In use connectors (not shown) forming the connections between one group of optical fibres and another group of fibre optic pigtails (not shown) are mounted within the apertures 2.

The patch panel 1 shown in the drawings is curved within the horizontal plane to provide a part-cylindrical surface. In an alternative embodiment (not shown) it could also be curved in the vertical plane so as to provide a part-spherical surface.

For mounting the patch panel 1 within a cabinet four mounting brackets 3 are provided along the lower edge 4 of the patch panel 1. The patch panel 1 extends at an angle of 105° from the plane in which the mounting brackets 3 extend so that when mounted the curved surface of the patch panel 1 slants backwards giving improved accessibility to connectors and optical fibres extending out of that convex surface. The optical fibres extending out from connectors mounted in the patch panel 1 will be regularly radially directed with optical fibres mounted via connectors held in apertures towards the right hand side of the patch panel 1 being directed out towards that side of the cabinet and optical fibres mounted within connectors held in apertures towards the left hand side of the patch panel 1 being directed towards the left hand side of the cabinet.

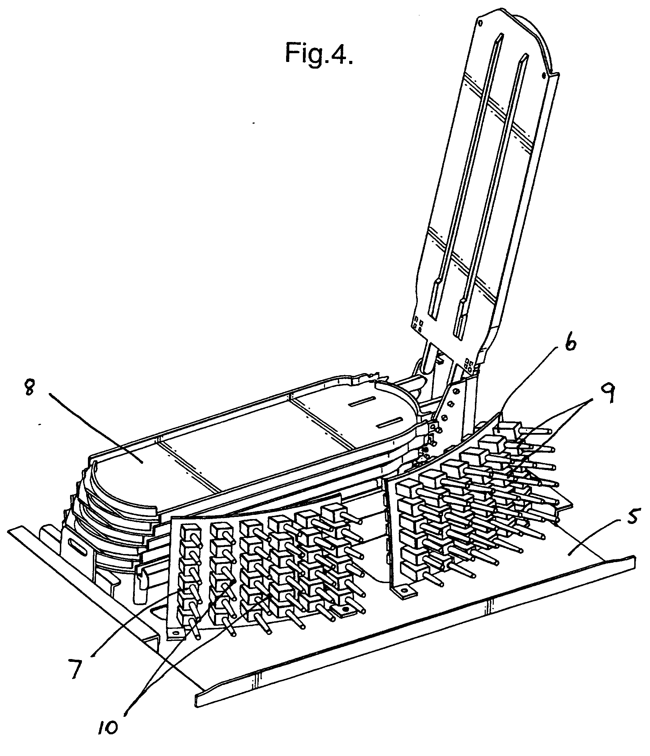

In Figure 4 two patch panels 6, 7 according to the present invention are mounted upon a splicing shelf 5. The patch panels 6, 7 are mounted at the front of the shelf 5 in front of a stack of splicing trays 8. The convex side of each of the patch panels 6, 7 faces frontally. The patch panels are mounted side by side along a radius of curvature so that connectors 9 mounted within the left hand patch panel 6 are directed out towards the left hand side of the shelf 5 and connectors 10 mounted within the right hand patch panel 7 are directed towards the right hand side of the shelf 5. This bidirectional curving provides maximum connector access at the front of the patch panels. Fibres connected to the patch panels can be easily organised or divided.

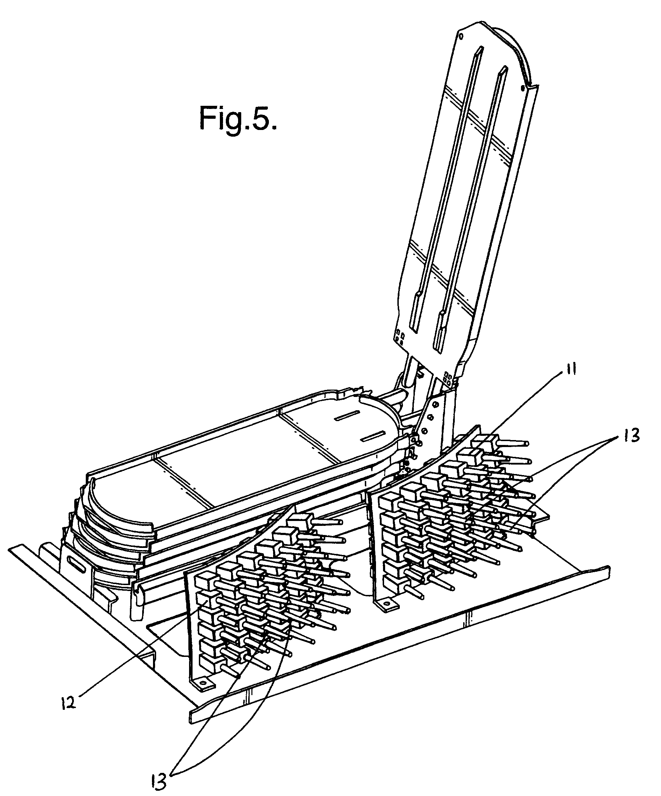

In Figure 5 two patch panels 11, 12 according to the present invention are mounted side by side but are both facing in substantially the same direction so that the connectors 13 are directed by the left hand side of the shelf.

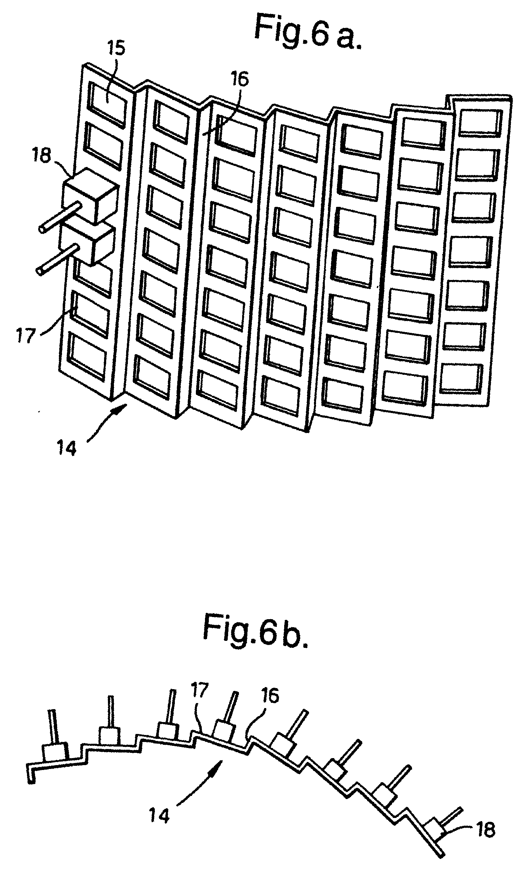

In Figure 6 a further embodiment of a patch panel 14 according to the present invention is shown. The patch panel 14 takes the form of a corrugated support provided with an array of apertures 15 for receiving connectors. The patch panel 14 is formed from a series of alternate, oppositely inclined faces 16, 17. Alternate faces are blank faces 16 and faces 17 provided with a column of apertures 15. The apertured faces form a series of racks or support members 17 for supporting connectors 18 which extend in stepped relation to one another. The support members 17 are orientated with relation to one another so that the apertures 15 located within them and thereby the connectors 18 are divergently forwardly directed. Two or more such panels may be used in combination to increase the overall divergence of connectors.

The illustrated embodiments allow connectors to be arranged in a fixed array allowing the density of those connectors to be maximised but at the same time they allow accessibility to connectors for re-patching as required. The distance from connector to connector is maximised creating maximised connector accessibility. The diverging direction of optical fibres connected upon the patch panels allows for greater organisation and manageability of those optical fibres than in cases where all the fibres are directed in the same direction.

## Claims

1. A panel for supporting a plurality of fibre optic connectors, which panel is provided with a plurality of apertures for receiving the connectors arranged in at least one row with a part of each connector so received being removable from a front of the panel, wherein the apertures of the at least one row are arranged such that connectors received therein diverge forwardly of the front of the panel.

2. A panel as claimed in Claim 1, in which the connectors received within the at least one row diverge forwardly of the front of the panel in a plurality of directions.

3. A panel as claimed in Claim 1 or 2, in which there are a plurality of rows of apertures for receiving the connectors arranged such that connectors held thereby in each row lie in a common plane, the planes defined by the connectors of each row being parallel to one another.

4. A panel as claimed in Claim 1 or 2, in which there are a plurality of rows of apertures for receiving the connectors, the apertures of each row being oriented such that connectors held thereby lie in a common plane, the planes defined by the connectors of the said rows being inclined with respect to one another.

5. A panel as claimed in any of Claims 1 to 4, in which the orientation of the apertures is determined by curvature of the panel.

6. A panel as claimed in any of claims 1 to 4, in which the panel has a plurality of corrugations defined by alternate oppositely inclined faces, and the apertures of the or a said row are formed in alternate said faces of the panel.

7. A panel as claimed in any preceding claim, in which the relative divergence of the connectors is constant along the or each row.

8. A panel as claimed in any preceding claim, in which the relative divergence of the connectors varies along the length of the row.

9. A panel as claimed in Claim 8, in which the relative divergence increases towards one or both ends of the or each row.

10. A panel as claimed in any preceding claim in which the apertures are oriented to define a part-spherical surface.

11. A panel as claimed in Claim 10, in which the part-spherical surface is part of an oblate or prelate sphere.

12. A cabinet incorporating at least one panel as claimed in any preceding claim, in which the panel is mounted such that it is at all points inclined to a plane perpendicular to a base plane of the cabinet.

13. A cabinet as claimed in Claim 12, having two or more panels as claimed in any of Claims 1 to 11, in which the apertures provided in the two panels define respective parts of a common spherical surface.
